# EUROPÄISCHE PATENTANMELDUNG

(11) **EP 4 459 063 A1**
(43) Veröffentlichungstag der Anmeldung: **06.11.2024**
(21) Anmeldenummer: 24156977.1
(22) Anmeldetag: 12.02.2024
(51) Int. Cl.: E04D 13/10, E04D 13/12, F24S 25/613, H02S 20/25

(54) **HALTEEINRICHTUNG FÜR AUFDACHELEMENTE ZUR VERWENDUNG MIT EINER DACHEINDECKUNGSPLATTE UND DACHEINDECKUNGSPLATTE MIT EINER SOLCHEN HALTEEINRICHTUNG**

(30) Priorität: 05.05.2023 DE 102023111792
(71) Anmelder: Mayr Dachkeramik GmbH, 94330 Salching (DE)
(72) Erfinder: Schmidt, Andreas, 94351 Feldkirchen (DE); Wolf, Heribert, 94330 Aiterhofen (DE)
(74) Vertreter: Glück Kritzenberger Patentanwälte PartGmbB

(57) **Zusammenfassung**

Die Erfindung betrifft eine Dacheindeckungsplatte (1) mit einer Halteeinrichtung (2) für Aufdachelemente, wobei die Dacheindeckungsplatte (1) einen plattenförmigen, sich entlang einer Längsachse (LA) erstreckenden Grundkörper (1.1) mit einer Ober- und Unterseite (1.11, 1.12) und die Halteeinrichtung (2) zumindest ein längliches Profilelement (2.1) mit einem Anlageabschnitt (2.11) aufweist. Besonders vorteilhaft ist zur Herstellung eines flächigen Verbundes zwischen dem plattenförmigen Grundkörper (1.1) und dem zumindest einem Profilelement (2.1) dessen Anlageabschnitt (2.11) mit dem plattenförmigen Grundkörper (1.1) direkt flächig verklebt, und zwar an der Oberseite (1.11) oder an der Unterseite (1.12) des plattenförmigen Grundkörpers (1.1).

## Beschreibung

Die Erfindung betrifft eine Dacheindeckungsplatte mit einer Halteeinrichtung für Aufdachelemente gemäß dem Oberbegriff des Patentanspruchs 1.

Der Aufbau von Gebäudedächern ist hinlänglich bekannt. Diese weisen neben einer Dachunterkonstruktion aus Dachsparren und Dachlatten darauf üblicherweise liegend montierte Dacheindeckungsplatten auf, die häufig auch als Dachpfannen oder Dachziegel bezeichnet werden. Derartige Dachpfannen oder Dachziegel werden aus Beton oder gebranntem Ton hergestellt. Jedoch sind auch aus Kunststoff oder Metall hergestellte Dacheindeckungsplatten bekannt.

Zur Montage von Aufdachelementen wie beispielsweise thermischen oder elektrischen Solarmodulen, Steigmitteln, Schneefangvorrichtungen oder sonstigen zur Aufdachmontage geeigneten Bauteilen sind bereits unterschiedliche Befestigungssysteme bekannt. Die Befestigung derartiger Aufdachelemente erfolgt dabei entweder direkt an der Dachunterkonstruktion und/oder mittels die Dacheindeckungsplatten am Montageort ersetzenden Montageplatten, die anstelle der Dacheindeckungsplatten vorgesehen werden. Häufig ist hierzu ein Entfernen der Dacheindeckungsplatten am Montageort erforderlich.

Aus der EP 2 274 792 B1 ist ein Dachbefestigungssystem bekannt, bei dem zur Anordnung eines Aufdachelements mindestens ein mit dem Dachsparren verbundenes Befestigungselement vorgesehen ist, welches sich vom Dachsparren durch eine in den Dachziegel eingebrachte Öffnung zur Oberseite des Daches erstreckt und zur Aufnahme eines Montageelements zur von der Dachoberseite beabstandeten Festlegung des Aufdachelements. Die in den Dachziegel eingebrachte Öffnung wird mit einer Abdeckung versehen, um das Eindringen von Flüssigkeiten in die Dachunterkonstruktion zu vermeiden. Nachteilig ist die nachträgliche Montage dieses Befestigungssystems auf einem bestehenden Dach äußerst zeit- und kostenaufwendig. Weiterhin nachteilig kann bei einer nicht sachgerechten Montage oder Verschleiß die Abdeckung zur Dichtheitsproblemen kommen.

Ferner ist aus der DE 298 18 738 U1 eine sogenannte Solareindeckungsplatte bekannt, mittels der eine Solarkollektorplatte auf einem mit Dacheindeckungsplatten eingedeckten Dachaufbau befestigt ist. Am Befestigungsort wird die Dacheindeckungsplatte durch eine Solareindeckungsplatte mit einer Halteeinrichtung ersetzt. Die Solareindeckungsplatten entspricht im Wesentlichen einer aus Kunststoff oder Blech hergestellten Dacheindeckungsplatte und weist eine Ober- und Unterseite auf. Die Halteinrichtung umfasst ein an der Unterseite der Dacheindeckungsplatte anliegendes plattenförmiges Stabilisierungsflächenelement sowie ein Aufsatzbügelelement, wobei das Aufsatzbügelelement zumindest mit einem Bügelabschnitt in einer Vertiefung in der Oberseite der Dacheindeckungsplatte aufgenommen ist. Zur Montage der Halteinrichtung werden das Stabilisierungsflächenelement und das Aufsatzbügelelement mit der Dacheindeckungsplatte miteinander verschraubt. Das plattenförmige Stabilisierungsflächenelement ist derart ausgebildet, dass es auf den zwei benachbarten Dachlatten aufliegt und zumindest einseitig mit diesen verschraubt werden kann. Nachteilig wird das Material durch das Einbringen der Vertiefung geschwächt, so dass es bei einer hohen Zug- oder Druckbelastung der Halteeinrichtung beispielsweise durch Wind zu einer Beschädigung der Solareindeckungsplatte im Bereich der Montagestelle kommen kann. Bei aus Beton oder gebrannten Ton hergestellten Dacheindeckungsplatten können die hohen Zug- oder Drucklasten zu einem Bruch der Dacheindeckungsplatten führen.

Ausgehend davon ist es Aufgabe der Erfindung, eine Dacheindeckungsplatte mit einer Halteeinrichtung für Aufdachelemente zu schaffen, die die eingangs beschriebenen Nachteile beseitigt, insbesondere eine im Vergleich zum Stand der Technik höhere mechanische Belastbarkeit aufweist.

Die Aufgabe wird durch eine Dacheindeckungsplatte gemäß Patentanspruch 1 gelöst. Vorteilhafte Weiterbildung der Erfindung sind Gegenstand der abhängigen Ansprüche, insbesondere eine Halteeinrichtung zur Verwendung mit einer Dacheindeckungsplatte.

Die erfindungsgemäße Dacheindeckungsplatte umfasst eine Halteeinrichtung für Aufdachelemente und einen plattenförmigen, sich entlang einer Längsachse erstreckenden Grundkörper mit einer Ober- und Unterseite, wobei die Halteeinrichtung zumindest ein längliches Profilelement mit einem Anlageabschnitt aufweist. Der wesentliche Aspekt der erfindungsgemäßen Dacheindeckungsplatte ist darin zu sehen, dass zur Herstellung eines flächigen Verbundes zwischen dem plattenförmigen Grundkörper und dem zumindest einem Profilelement dessen Anlageabschnitt mit dem plattenförmigen Grundkörper direkt flächig verklebt ist, und zwar an der Oberseite oder an der Unterseite des plattenförmigen Grundkörpers. Besonders vorteilhaft wird durch die flächige Klebeverbindung zwischen dem plattenförmigen Grundkörper und dem Anlageabschnitt des Profilelementes die mechanische Festigkeit der Dacheindeckungsplatte, insbesondere im Montagebereich erhöht und dadurch eine direkte Montage vom Aufdachelementen auf der Platte selbst möglich, ohne dass eine Montageverbindung zur Dachunterkonstruktion hergestellt werden muss. Dadurch kann durch einen einfachen Austausch von herkömmlichen Dacheindeckungsplatten mit erfindungsgemäßen Dacheindeckungsplatten mit einer Halteeinrichtung eine schnelle und mechanisch belastbare Montage von Aufdachelementen erfolgen.

Im erfindungsgemäßen Sinne ist die Halteeinrichtung zur Montage von Aufdachelementen in Form von thermischen oder elektrischen Solarmodulen, Steigmitteln, Schneefangvorrichtungen oder sonstige zur Dachmontage geeignete Baueinheiten ausgebildet.

Weiterhin vorteilhaft erstreckt sich der flächige Verbund entlang der Längsachse der Dacheindeckungsplatte. Besonders vorteilhaft ist der flächige Verbund zwischen dem plattenförmigen Grundkörper und dem zumindest einem Profilelement zur Erhöhung der mechanischen Festigkeit des plattenförmigen Grundkörpers vorgesehen. Dadurch kann ein plötzliches Versagen der mit einer Halteeinrichtung versehenden Dacheindeckungsplatte durch Bruch oder Verlust der Haltefunktion effektiv vermieden werden.

Besonders bevorzugt ist der Anlageabschnitt plattenförmig, gitterartig oder wabenförmig ausgebildet, wobei der flächige Verbund durch eine direkte flächige Klebeverbindung zwischen dem Anlageabschnitt und dem plattenförmigen Grundkörper gebildet ist. Durch die entsprechende Form und Dimensionierung des Anlageabschnittes ist eine zusätzliche Erhöhung der mechanischen Festigkeit der Verbundlösung möglich.

In einer bevorzugten Ausführungsvariante umfasst die Halteeinrichtung ein erstes und zweites längliches Profilelement, wobei jedes der Profilelemente einen Anlageabschnitt aufweist. Zur Herstellung des flächigen Verbundes zwischen dem plattenförmigen Grundkörper und dem ersten und zweiten länglichen Profilelement ist der Anlageabschnitt des ersten länglichen Profilelementes mit der Oberseite des plattenförmigen Grundkörpers und der Anlageabschnitt des zweiten länglichen Profilelementes mit der Unterseite des plattenförmigen Grundkörpers flächig verklebt. Es entsteht damit eine drei Schichten, insbesondere zwei flächige Klebeverbindungen umfassende Verbundlösung, dessen mechanische Steifigkeit durch die Verwendung zweier, einander gegenüberliegenden Profileelemente nochmal wesentlich erhöht ist.

In einer Weiterbildung der Erfindung findet zur Herstellung des flächigen Verbundes ein Klebstoff Verwendung, der zur Herstellung einer direkten flächigen Klebeverbindung zwischen Materialien mit unterschiedlichen Ausdehnungskoeffizienten geeignet ist. Beispielsweise kann zur Herstellung des flächigen Verbundes ein Klebstoff aus Epoxidharz Verwendung findet, der vorzugsweise kälteelastisch und/oder duktil ist. Trotz der hohen Temperaturschwankungen auf Gebäudedächern ist dadurch ein thermisch belastbarer flächiger Verbund gegeben.

Besonders vorteilhaft weist der plattenförmige Grundkörper zumindest einen sich entlang der Längsachse erstreckenden, zentralen Montagebereich auf, an den der Anlageabschnitt zur Herstellung des flächigen Verbundes hinsichtlich Form und Größe angepasst ist. Der oder die Anlageabschnitt€ der Profilelemente sind damit an die Ober- und/oder Unterseite des zentralen Montagebereiches, welcher vorzugsweise eben ausgebildet ist, angepasst und erstrecken sich zumindest über die halbe Länge der Dacheindeckungsplatten, vorzugsweise über zwei Drittel der Länge der Dacheindeckungsplatten.

In einer bevorzugten Ausführungsvariante weist die Halteeinrichtung Verriegelungsmittel zur Verriegelung der Dacheindeckungsplatte an einer Dachunterkonstruktion auf. Die Verriegelungsmittel sind von einem verriegelten Zustand in einen entriegelten Zustand und vice versa überführbar, und zwar über Betätigungsmittel von der Oberseite des plattenförmigen Grundkörpers. Mittels der Verriegelungsmittel ist die Halteeinrichtung bzw. die Dacheindeckungsplatte gegen eine durch Wind erzeugte Sogwirkung an der Dachunterkonstruktion gesichert. Besonders vorteilhaft erfolgt die Ent- und Verriegelung von der Außendachseite, so dass die Dacheindeckungsplatte erst eingebaut und dann an der Dachunterkonstruktion verriegelt werden kann. Auch ist dadurch ein einfacher Austausch von Dacheindeckungsplatten möglich.

In einer vorteilhaften Ausführungsvariante sind die Verriegelungsmittel durch zumindest einen, vorzugsweise zwei Verriegelungshebelelement(en) gebildet, der bzw. die jeweils um eine Schwenkachse dreh- oder schwenkbar sind, wobei die jeweilige Schwenkachse vorzugsweise senkrecht zur Längsachse des plattenförmigen Grundkörpers verläuft. Die Verriegelungshebelelemente hintergreifen in der verriegelten Position die Dachlatten, wodurch eine optimale Sicherung vor der genannten Sogwirkung erreicht wird.

In einer weiteren vorteilhaften Ausführungsvariante der erfindungsgemäßen Dacheindeckungsplatte sind zur Positionierung der Halteeinrichtung in einem zentralen Montagebereich des plattenförmigen Grundkörpers Positionierungsmittel vorgesehen sind. Die Positionierungsmittel dienen insbesondere bei der Herstellung des flächigen Verbundes zu einer exakten Positionierung der Halteeinrichtung entlang der Längsachse der Dacheindeckungsplatte.

In einer vorteilhaften Ausführungsvariante weist das erste längliche Profielement einen freien Endabschnitt auf, der sich bei einer flächigen Montage auf der Oberseite des plattenförmigen Grundkörpers des Dacheindeckungselementes in einen unteren Randabschnitt des plattenförmigen Grundkörpers erstreckt, und zwar in denjenigen, mit dem der plattenförmige Grundkörper auf einem entlang der Längsachse anschließende Dacheindeckungselement abschnittsweise zur Anlage gelangt. Alternativ oder zusätzlich kann das erste längliche Profielement oder das zweite längliche Profilelement einen freien Endabschnitt aufweisen, der sich bei einer flächigen Montage auf der Unterseite des plattenförmigen Grundkörpers des Dacheindeckungselementes in einen unteren Randabschnitt des plattenförmigen Grundkörpers erstreckt, und zwar in denjenigen, der zumindest abschnittsweise auf der Dachunterkonstruktion bzw. der Dachlatte zur Anlage gelangt. Besonders vorteilhaft wird durch die beschriebenen Verlängerungen der länglichen Profilelemente in den oberen oder unteren Auflagebereich der plattenförmige Grundkörper zusätzlich versteift und bei hohen auf die Halteeinrichtung einwirkenden Lasten ein plötzlicher Totalausfall des Dacheindeckungselementes durch vollständigen Bruch effektiv vermieden. Weiterhin vorteilhaft wird bei Vorsehen eines ersten und zweiten länglichen Profilelementes an der Ober- und Unterseite des plattenförmigen Grundkörpers der Raum zwischen der oberen Dachlatte und dem nachfolgenden Dacheindeckungselement vollständig überbrückt.

In einer weiteren Ausführungsvariante weisen das erste und/oder zweite längliche Profileelement im oberen und/oder unteren Randabschnitt des plattenförmigen Grundkörpers einen verbreiterten freiendseitigen Profilabschnitt aufweisen. Vorteilhaft kann dadurch die Anlagefläche und damit auch die wirksame Fläche des flächigen Verbundes weiter erhöht werden, was zu einer zusätzlichen Versteifung des plattenförmigen Grundkörpers führt.

Weiterhin vorteilhaft ist das zumindest eine längliche Profilelement aus Metall, insbesondere einem Metallblech und die Dacheindeckungsplatte aus gebrannten Ton, Beton oder einem vergleichbaren Material hergestellt. Der erfindungsgemäße flächige Verbund ermöglicht die Verwendung einer metallischen Halteeinrichtung zur direkten Aufdachmontage von Aufdachelementen auf aus gebrannten Ton oder Beton hergestellten Dacheindeckungsplatten, deren materialbedingten mechanischen Eigenschaften ohne die Verbundlösung bei Einleitung von Zug- oder Drucklasten beschädigt würden.

Ebenfalls ist Gegenstand eine Halteeinrichtung zur Verwendung mit einer Dacheindeckungsplatte, die in der zuvor beschriebenen Weise ausgebildet ist. Diese umfasst zumindest ein längliches Profilelement mit einem Anlageabschnitt, wobei der Anlageabschnitt zur Herstellung eines flächigen Verbundes zwischen einem plattenförmigen Grundkörper der Dacheindeckungsplatte und dem Anlageabschnitt mittels einer direkten flächigen Klebeverbindung ausgebildet ist. Besonders vorteilhaft können bestehende Dacheindeckungsplatten mit einer erfindungsgemäßen Halteeinrichtung nachgerüstet werden. Eine Nachrüstung ist für unterschiedliche Plattenformate möglich.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine perspektivische Draufsicht auf eine Anordnung einer erfindungsgemäßen Dacheindeckungsplatte mit Halteeinrichtung für Aufdachelemente und einer daran anschließenden herkömmlichen Dacheindeckungsplatte,
- Fig. 2: beispielhaft eine perspektivische Ansicht der Unterseite der in Figur 1 gezeigten Anordnung,
- Fig. 3: eine schematische Seitenansicht der in Figur 1 gezeigten Anordnung,
- Fig. 4: beispielhaft eine perspektivische Ansicht einer ersten Ausführungsvariante einer freigestellten erfindungsgemäßen Halteeinrichtung im verriegelten Zustand,
- Fig. 5: beispielhaft eine perspektivische Ansicht der ersten Ausführungsvariante einer freigestellten erfindungsgemäßen Halteeinrichtung im entriegelten Zustand,
- Fig. 6: beispielhaft eine Seitenansicht der in Figur 4 gezeigten freigestellten erfindungsgemäßen Halteeinrichtung,
- Fig. 7: beispielhaft eine stirnseitige Ansicht der in Figur 4 gezeigten freigestellten erfindungsgemäßen Halteeinrichtung,
- Fig. 8: beispielhaft eine perspektivische Draufsicht auf eine Anordnung einer erfindungsgemäßen Dacheindeckungsplatte mit einer alternativen Halteeinrichtung für Aufdachelemente und einer daran anschließenden herkömmlichen Dacheindeckungsplatte,
- Fig. 9: beispielhaft eine perspektivische Ansicht der Unterseite der in Figur 8 gezeigten Anordnung,
- Fig. 10: eine schematische Seitenansicht der in Figur 8 gezeigten Anordnung,
- Fig. 11: beispielhaft eine perspektivische Ansicht einer zweiten Ausführungsvariante einer freigestellten erfindungsgemäßen Halteeinrichtung im verriegelten Zustand,
- Fig. 12: beispielhaft eine perspektivische Ansicht der zweiten Ausführungsvariante einer freigestellten erfindungsgemäßen Halteeinrichtung im entriegelten Zustand, und
- Fig. 13: beispielhaft eine stirnseitige Ansicht der in Figur 12 gezeigten freigestellten erfindungsgemäßen Halteeinrichtung im entriegelten Zustand.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

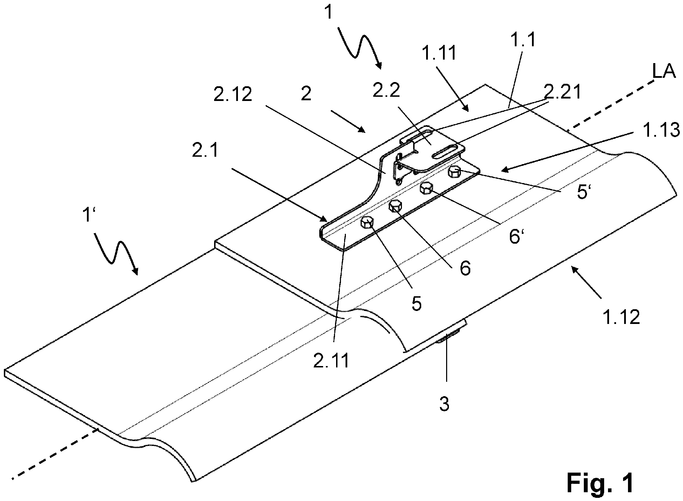

Figur 1 zeigt eine perspektivische Draufsicht auf eine Anordnung umfassend eine erste und zweite Dacheindeckungsplatte 1, 1', wobei die erste Dacheindeckungsplatte 1 erfindungsgemäß eine Halteeinrichtung 2 für Aufdachelemente aufweist. Die zweite Dacheindeckungsplatte 1' entspricht hinsichtlich Form und Größe der erfindungsgemäßen Dacheindeckungsplatte 1 mit Halteeinrichtung 2, weist jedoch keine Halteeinrichtung 2 für Aufdachelemente auf.

Beide Dacheindeckungsplatten 1, 1' erstrecken sich entlang einer Längsachse LA und schließen in der gezeigten Anordnung entlang ihrer Längsachsen LA aneinander an, und zwar überlappen diese mit ihren benachbarten freien Enden, so dass bei einer Verlegung im Verbund eine geschlossene Dacheindeckung entsteht. Zur Vervollständigung der Dacheindeckung schließen sich in an sich bekannter Weise weitere Dacheindeckungsplatten 1, 1' sowohl seitlich als auch oberhalb und unterhalb der gezeigten Anordnung an.

Die Dacheindeckungsplatten 1, 1' liegen auf einer Dachunterkonstruktion aus Dachsparren und Dachlatten 3, 3' auf, wobei im vorliegenden Ausführungsbeispiel lediglich zwei parallel zueinander und senkrecht zur Längsachse LA der Dacheindeckungsplatten 1, 1' verlaufende Dachlatten 3, 3' beispielhaft gezeigt sind, um die Positionierung der Dacheindeckungsplatte 1 bzw. deren Halteeinrichtung 2 in Bezug auf die Dachlatten 3, 3' näher zu erläutern.

Die Dacheindeckungsplatte 1 weist einen plattenförmigen, sich entlang der Längsachse LA erstreckenden Grundkörper 1.1 mit einer Ober- und Unterseite 1.11, 1.12 auf, wobei die Oberseite 1.11 einen Teil der äußeren Dachfläche der Dacheindeckung bildet. Die Unterseite 1.12 des plattenförmigen Grundkörper 1.1 ist der Dachunterkonstruktion zugewandt und zumindest ein freier Endabschnitt des plattenförmigen Grundkörpers 1.1 kommt im verlegten Zustand auf einer der Dachlatten 3, 3' entweder direkt oder indirekt zu liegen.

Erfindungsgemäß weist die Dacheindeckungsplatte 1 eine Halteeinrichtung 2 für Dachelemente auf, die vorzugsweise mehrteilig ausgebildet ist. Vorzugsweise ist die Halteeinrichtung aus Metall, insbesondere einem Metallblech hergestellt. Die Dacheindeckungsplatte 1 ist aus gebranntem Ton, Beton oder einem vergleichbaren Material hergestellt. Auch kann die Dacheindeckungsplatte 1 aus Kunststoff oder Metall hergestellt sein.

Aufdachelemente im erfindungsgemäßen Sinne sind Bauteile oder Baueinheiten, die zur Aufdachmontage ausgebildet sind. Diese werden häufig beabstandet zur Oberfläche der Dacheindeckung montiert, um ein ungehindertes Abfließen von Regenwasser zu gewährleisten. Aufdachelemente können beispielsweise thermische oder elektrische Solarmodule, Steigmittel oder Schneefangvorrichtungen sowie Mittel zur Dachbegrünung sein.

Die Halteeinrichtung 2 weist zumindest ein erstes längliches Profilelement 2.1 mit einem Anlageabschnitt 2.11 und einem daran anschließenden Halteabschnitt 2.12 auf, wobei der Halteabschnitt 2.12 zur Aufnahme von Montagehilfsmitteln, beispielsweise in Form eines Haltewinkelelementes 2.2 zur Festlegung eines Aufdachelements an der Halteeinrichtung 2 und damit an der mit dieser verbundenen Dacheindeckungsplatte 1 ausgebildet ist. Zur Einstellung des Neigungswinkels und/oder Abstandes zur Oberseite 1.11 des plattenförmigen Grundkörpers 1.1 kann im Halteabschnitt 2.12 und/oder im Haltewinkelelement 2.2 zumindest ein Langloch oder eine Durchgangsbohrung vorgesehen sein, durch welche Montagehilfsmittel wie beispielsweise Schrauben oder dergleichen lösbare Befestigungsmittel durchführbar sind. Dadurch ist beispielsweise eine um eine Schwenkachse schwenkbare und höhenverstellbare Klemmverbindung zwischen dem Halteabschnitt 2.12 und dem Haltewinkelelement 2.2 herstellbar. Auch kann das Haltewinkelelement 2.2 zusätzliche Montagelanglöcher 2.21 zur Montage des Aufdachelements mittels weiterer Schrauben aufweisen.

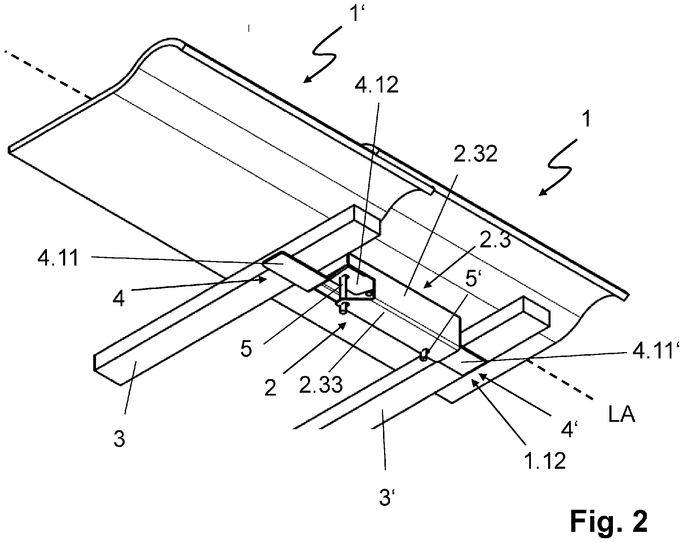

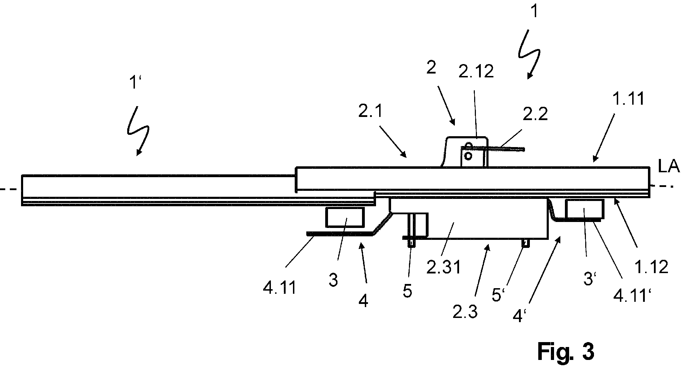

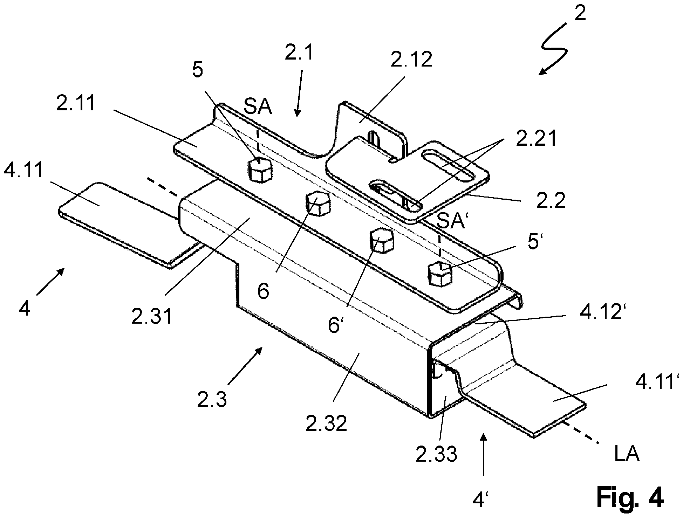

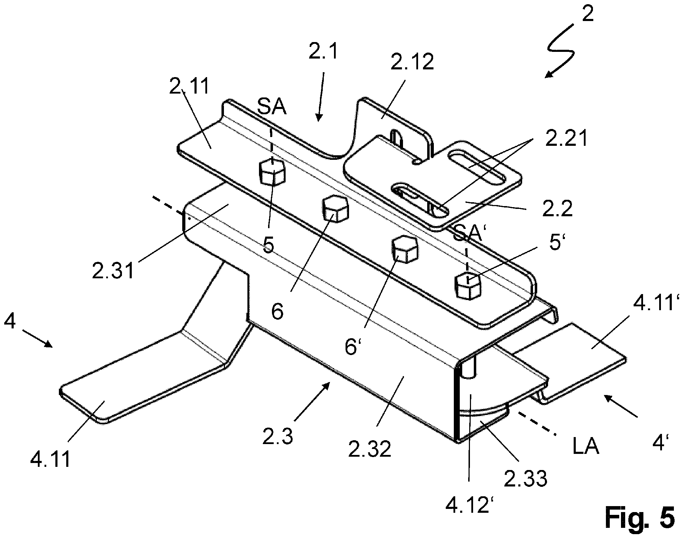

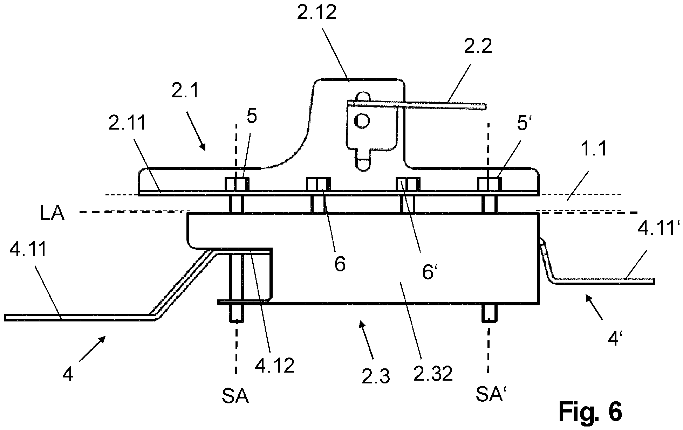

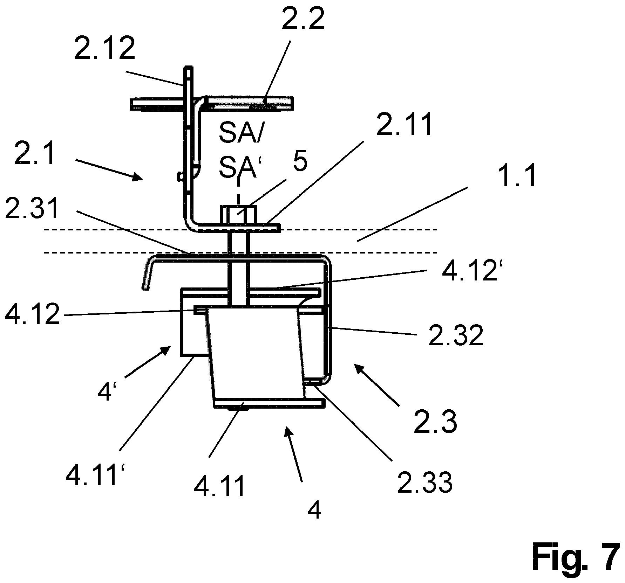

In einem ersten Ausführungsbeispiel gemäß der Figuren 1 bis 7 ist das erste längliche Profilelement 2.1 auf der Oberseite 1.11 des plattenförmigen Grundkörpers 1.1 befestigt, und zwar ist ein flächiger Verbund zwischen dem plattenförmigen Grundkörper 1.1 und dem ersten länglichen Profilelement 2.1 dadurch hergestellt, dass dessen Anlageabschnitt 2.11 mit dem plattenförmigen Grundkörper 1.1 direkt flächig verklebt ist, und zwar mit bzw. an dessen Oberseite 1.11.

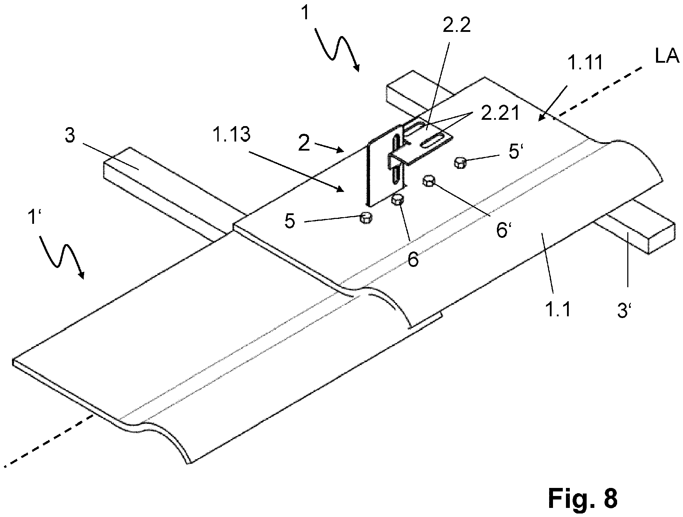

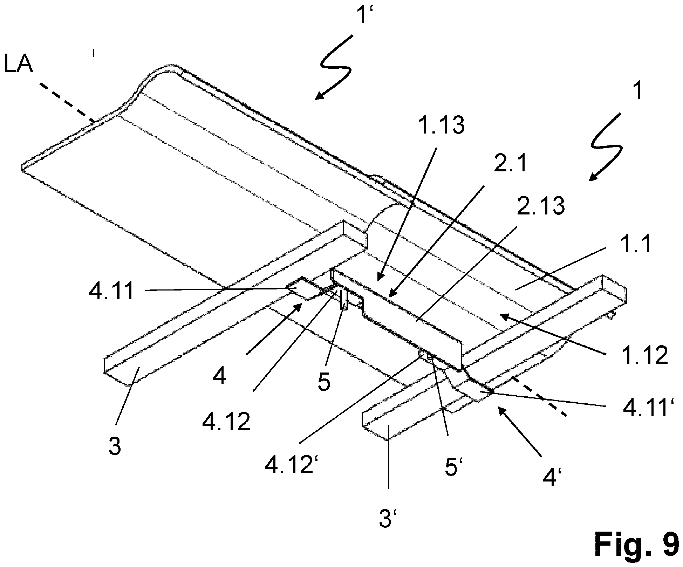

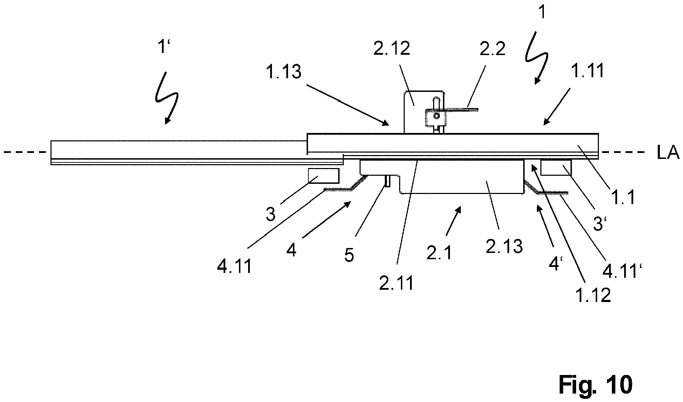

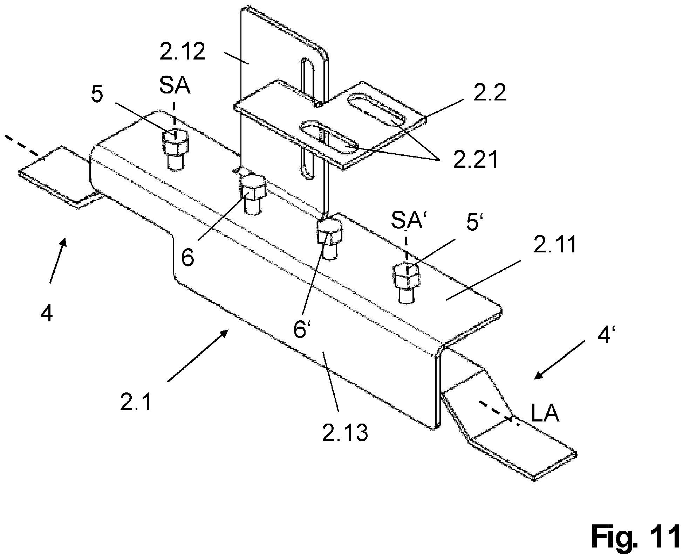

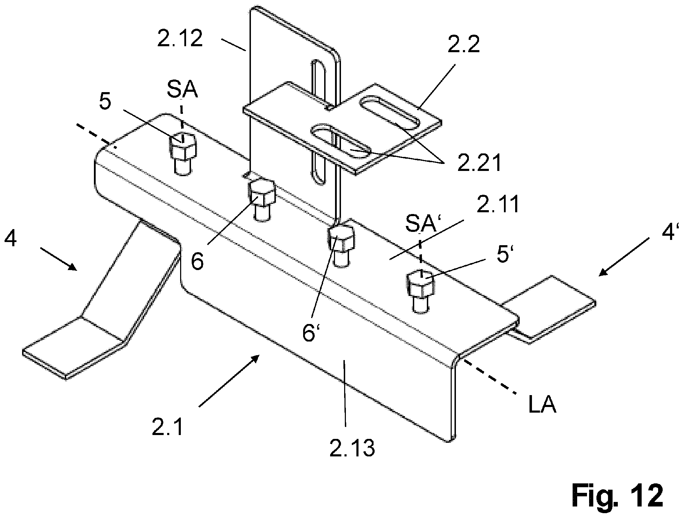

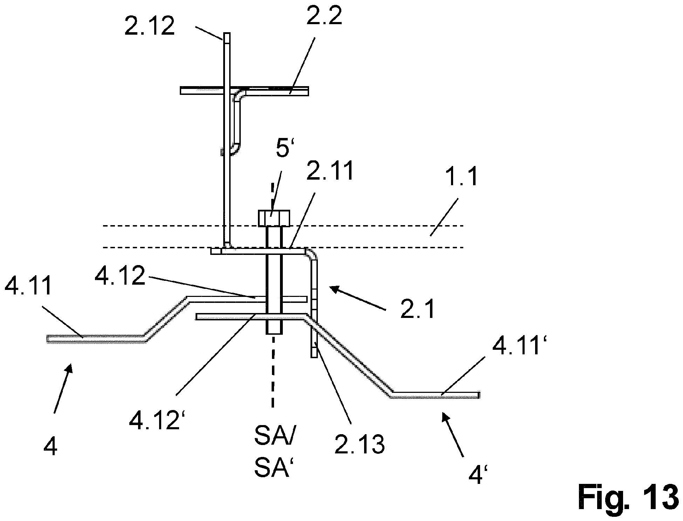

Die Figuren 8 bis 13 zeigen eine zweite Ausführungsvariante der Erfindung gemäß der das erste längliche Profilelement 2.1 auf der Unterseite 1.12 des plattenförmigen Grundkörpers 1.1 befestigt ist. Auch hier ist ein flächiger Verbund zwischen dem plattenförmigen Grundkörper 1.1 und dem ersten länglichen Profilelement 2.1 dadurch hergestellt, dass dessen Anlageabschnitt 2.11 mit dem plattenförmigen Grundkörper 1.1 direkt flächig verklebt ist, und zwar mit bzw. an dessen Unterseite 1.12.

Der flächige Verbund erstreckt sich damit jeweils entlang der Längsachse LA und dient zur Versteifung des plattenförmigen Grundkörpers 1.1 in einem zentralen Montagebereich 1.13, und zwar an der Oberseite 1.11 und/oder an der Unterseite 1.12. Dadurch wird die mechanische Festigkeit der Dacheindeckungsplatte 1 im Bereich des flächigen Verbundes bzw. des zentralen Montagebereiches 1.13 deutlich verbessert, insbesondere verhindert die erfindungsgemäße Verbundlösung einen Bruch oder sonstige mechanische Beschädigung des plattenförmigen Grundkörpers 1.1 aufgrund über die Halteeinrichtung 2 in die Dacheindeckungsplatte 1 eingeleitete Zug- oder Druckkräfte. Diese können auf unterschiedliche Ursachen zurückzuführen sein, beispielsweise im Falle von thermischen oder elektrischen Solarmodulen kann eine starke Windlast zu enormen Zug- oder Druckkräften im Bereich der Halteeinrichtung 2 führen.

Der flächige Verbund ist schichtartig aufgebaut, und zwar bildet der Anlageabschnitt 2.11 eine erste Schicht und der plattenförmige Grundkörper 1.1 eine zweite Schicht, die über eine flächige Klebeverbindung miteinander verbunden sind und die damit eine dritte Schicht bildet. Vorzugsweise findet zur Herstellung der flächigen Klebeverbindung zwischen der Oberseite 1.11 bzw. Unterseite 1.12 des plattenförmigen Grundkörpers 1.1 und dem Anlageabschnitt 2.11 des ersten länglichen Profilelementes 2.1 ein Klebstoff Verwendung, der zur direkten flächigen Verbindung von Materialien mit unterschiedlichen Ausdehnungskoeffizienten geeignet ist, wie beispielsweise Metall und gebrannten Ton oder Metall und Beton.

Der Klebstoff kann aus Epoxidharz hergestellt und beispielsweise kälteelastisch ausgebildet sein. Beispielsweise kann ein derartiger Klebstoff aus Epoxidharz mehrere elastische Zonen aufweisen, die insbesondere auch bei einer Außentemperatur von bis zu - 40 Grad einen Sprödbruch verhindern. Vorzugsweise ist durch eine spezielle Implementierung dieser elastischen Zonen der Klebstoff aus Epoxidharz dennoch strukturell und weist auch bei Außentemperatur bis zu 100 Grad noch eine Festigkeit von 1,5 - 4 N/m² auf. Der Klebstoff ist korrosionsbeständig und weist ausgezeichnete Hafteigenschaften auf. Auch kann der Klebstoff duktil ausgebildet sein und sich entsprechend verformen.

Der Anlageabschnitt 2.11 des ersten länglichen Profilelementes 2.1 ist plattenförmig, gitterartig oder wabenförmig ausgebildet, so dass eine flächige Klebeverbindung zwischen dem Anlageabschnitt 2.11 und der Ober- oder Unterseite 1.11, 1.12 des plattenförmigen Grundkörpers 1.1 herstellbar ist.

Zur flächigen Montage des Anlageabschnitt 2.11 an der Ober- oder Unterseite 1.11, 1.12 weist der plattenförmige Grundkörper 1.1 zumindest einen sich entlang der Längsachse LA erstreckenden, zentralen Montagebereich 1.13 auf, in dem die Ober- und/oder Unterseite 1.11, 1.12 des plattenförmigen Grundkörper 1.1 im Wesentlichen eben ausgebildet sind.

Die Abmessungen des Anlageabschnittes 2.11 sind an diesen zentralen Montagebereich 1.13 derart angepasst, dass der Anlageabschnitt 2.11 mit seiner Unter- oder Oberseite vollständig flächig im Bereich des zentralen Montagebereiches 1.13 zur Anlage an der Ober- oder Unterseite 1.11, 1.12 des plattenförmigen Grundkörpers 1.1 gelangt. Die Unter- oder Oberseite des Anlageabschnittes 2.11 bildet somit eine zur Herstellung der flächigen Klebeverbindung geeignete Fläche aus, mit der dieser vollständig ober- oder unterseitig im zentralen Montagbereich 1.13 an der Ober- bzw. Unterseite 1.11, 1.12 des plattenförmigen Grundkörpers 1.1 anliegt. Zwischen der Ober- oder Unterseite des Anlageabschnittes 2.11 und der Ober- oder Unterseite 1.11, 1.12 des plattenförmigen Grundkörpers 1.1 wird die durchgehende, flächige Klebeverbindung eingebracht.

Der Anlageabschnitt 2.11 weist in den vorliegenden Ausführungsbeispielen eine im Wesentlichen rechteckförmigen, ebenen Flächenabschnitt auf, der die zum Verkleben vorgesehene Ober- bzw. Unterseite bildet. Im vorliegenden ersten Ausführungsbeispiel weist das erste längliche Profilelement 2.1 einen L-förmigen Querschnitt auf, wobei der Anlageabschnitt 2.11 des kürzen Schenkel und der Halteabschnitt 2.12 den längeren Schenkel bildet. Der Halteabschnitt 2.12 ist dabei flanschartig ausgebildet und erstreckt sich näherungsweise senkrecht zum Anlageabschnitt 2.11. Vorzugsweise erstreckt sich der Halteabschnitt 2.12 nur teilweise entlang des Anlageabschnittes 2.11, und zwar in dessen Mittenbereich. Die Längserstreckung ist näherungsweise gleich oder kleiner als ein Drittel der Längserstreckung des Anlagenabschnittes 2.11 entlang der Längsachse LA, welche auch die Länge des flächigen Verbundes vorgibt. Der das erste längliche Profilelement 2.1 bildende Anlageabschnitt 2.11 und Halteabschnitt 2.12 sind vorzugsweise einstückig ausgebildet oder aneinander angeformt. Bei der in den Figuren 8 bis 13 dargestellten zweiten Ausführungsvariante erstreckt sich der Halteabschnitt 2.12 vom ebenen, plattenförmigen Anlageabschnitt 2.11 vertikal nach oben und das erste Profilelement 2.1 weist einen weiteren Halteabschnitt 2.13 auf, der wiederum ausgehend vom ebenen plattenförmigen Anlageabschnitt 2.11 vertikal nach unten verläuft. Der weiteren Halteabschnitt 2.13 auf ist im Wesentlichen eben und plattenförmig ausgebildet sowie vorzugsweise einstückig mit dem Anlageabschnitt 2.11 ausgebildet. Im vorliegenden zweiten Ausführungsbeispiel bilden der Anlageabschnitt 2.11 und der weiteren Halteabschnitt 2.13 ein L-förmiges Profilelement aus.

Bei der in den Figuren 1 bis 7 dargestellten ersten Ausführungsvariante ist die Unterseite des Anlageabschnittes 2.11 mit der Oberseite 1.11 des plattenförmigen Grundkörpers 1.1 flächig verklebt. Bei der zweiten Ausführungsvariante der Figuren 8 bis 13 ist die Oberseite des Anlageabschnittes 2.11 mit der Unterseite 1.12 des plattenförmigen Grundkörpers 1.1 verklebt und der nach oben flanschartig wegestehende Halteabschnitt 2.12 durch eine schlitzförmige Ausnehmung 1.2 im plattenförmigen Grundkörper 1.1 geführt, und zwar derart, dass dessen freie, zur Montage des Aufdachelements vorgesehene Endabschnitt von der Oberseite 1.11 des plattenförmiges Grundkörpers 1.1 vorzugsweise senkrecht nach oben wegsteht und für die Montage des Haltewinkelelementes 2.2 frei zugänglich ist.

In beiden Ausführungsvarianten umfasst die Halteeinrichtung 2 Verriegelungsmittel 4, 4' zur Verriegelung der Dacheindeckungsplatte 1 an der Dachunterkonstruktion, vorzugweise den Dachsparren 3, 3'. Die Verriegelungsmittel 4, 4' sind von einem verriegelten Zustand in einen entriegelten Zustand und vice versa überführbar, und zwar über Betätigungsmittel 5, 5' von der Oberseite 1.11 des plattenförmigen Grundkörper 1.1 bzw. der Dacheindeckungsplatte 1. Die Verriegelung der Dacheindeckplatte 1 an der Dachunterkonstruktion kann damit mittels der Verriegelungsmittel 4, 4' nach dem Einbau der Dacheindeckungsplatte 1 erfolgen. Mittels der Betätigungsmittel 5, 5' sind die Verriegelungsmittel 4, 4' von der Dachaußenseite betätigbar.

Die Verriegelungsmittel 4, 4' sind beispielsweise in Form von Verriegelungshebelelementen 4.1, 4.1' realisiert, die jeweils um eine Schwenkachse SA, SA' dreh- oder schwenkbar sind, wobei die Schwenkachse SA, SA' vorzugsweise senkrecht zur Längsachse LA des plattenförmigen Grundkörper 1.1 verläuft. Die Verriegelungshebelelemente 4.1, 4.1' weisen zumindest einen freiendseitigen, ebenen Verriegelungsabschnitt 4.11, 4.11' auf, der beispielsweise in einer Ebene parallel zur Längsachse LA angeordnet ist und im verriegelten Zustand die Dachsparren 3, 3' hintergreift, und zwar derart, dass ein Abheben der Dacheindeckungsplatte 1 von der Dachunterkonstruktion gesperrt wird. Die Verriegelungsmittel 4, 4' fixieren somit die Dacheindeckungsplatte 1 an der Dachunterkonstruktion, um einer beispielsweise von einem Windstoß erzeugten Sogwirkung entgegenzuwirken.

Die Verriegelungshebelelemente 4.1, 4.1' sind hierzu dreh- oder schwenkbar um die jeweilige Schwenkachse SA, SA' am ersten länglichen Profilelement 2.1 und/oder einem zweiten länglichen Profilelement 2.3 festgelegt, wobei das zweite längliches Profilelement 2.3 lösbar mit dem ersten länglichen Profilelement 2.1 verbunden ist. Das zweite längliche Profilelement 2.3 ist in der ersten Ausführungsvariante vorgesehen und wird zusätzlich an der Unterseite 1.12 des plattenförmigen Grundkörpers 1.1 montiert, vorzugsweise ebenfalls flächige verklebt. Hierzu weist das zweite längliche Profilelement 2.3 ebenfalls einen Anlageabschnitt 2.31 und einen Halteabschnitt 2.32 auf, die vorzugsweise fest miteinander verbunden oder einstückig ausgebildet sind. Der Anlageabschnitt 2.31 des zweiten länglichen Profilelement 2.3 ist mit der Unterseite 1.12 des plattenförmigen Grundkörpers 1.1 flächig verklebt, so dass ein flächiger Verbund zwischen dem plattenförmigen Grundkörper 1.1 und dem ersten und zweiten länglichen Profilelement 2.1, 2.3 entsteht, wobei der zentrale Montagebereich 1.13 des plattenförmigen Grundkörpers 1.1 zwischen dem ersten und zweiten länglichen Profilelement 2.1, 2.3 ist.

In den gezeigten Ausführungsbeispielen ist das Betätigungselement 5, 5' durch eine Schraube gebildet, welche drehbar in einer Durchgangsbohrung mit Innengewinde im ersten und/oder zweiten länglichen Profilelement 2.1, 2.3 aufgenommen ist, und war derart, dass der Kopf der Schraube von außen, von der Oberseite 1.11 des plattenförmigen Grundkörpers 1.1 zugänglich ist. Die Schraube ist drehbar um die jeweilige Schwenkachse SA, SA' im Innengewinde der jeweiligen Durchgangsbohrung im ersten oder zweiten Profileelement 2.1, 2.3 angeordnet. Der dem Kopf der Schraube gegenüberliegende freie Endabschnitt der Schraube ist drehfest mit einem dem freiendseitigen, ebenen Verriegelungsabschnitt 4.11, 4.11' gegenüberliegenden Montageabschnitt 4.12, 4.12' der Verriegelungshebelelemente 4.1, 4.1' verbunden, so dass eine Drehung der Schraube im oder gegen den Uhrzeigersinn um die Schwenkachse SA, SA' ein entsprechendes Schwenken des freiendseitigen, ebenen Verriegelungsabschnittes 4.11, 4.11' bewirkt. Auch kann zumindest ein Drehanschlag vorgesehen sein, der ein Schwenken des freiendseitigen, ebenen Verriegelungsabschnitt 4.11, 4.11' auf einen vorgegebenen Schwenkbereich einschränkt. Bei den vorliegenden Ausführungsvarianten beträgt der Schwenkwinkel zwischen dem verriegelten und dem entriegelten Zustand beispielsweise 90°.

Um einen entsprechenden Drehanschlag zu bilden weist beispielsweise beim ersten Ausführungsbeispiel das zweite längliche Profilelement 2.3 einen L-förmigen oder U-förmigen Querschnitt auf, so dass sich an Anlageabschnitt 2.31 zumindest ein weiterer, vorzugsweise plattenförmiger, ebener Anschlagabschnitt 2.32 und im Falle der U-förmigen Ausbildung ein parallel und beanstandet zum Anlageabschnitt 2.31 verlaufender und an den Anschlagabschnitt 2.32 anschließender Halteabschnitt 2.33 anschließt. Der Anschlagabschnitt 2.32 bildet dabei den Drehanschlag für die an den gegenüberliegenden freien Enden des zweiten länglichen Profilelement 2.3 angeordneten Verriegelungshebelelemente 4.1, 4.1' aus, wobei hierzu eine entsprechende den Drehwinkel freigebende Aussparung vorgesehen sein kann und/oder das freie Ende des Montageabschnitts 4.12, 4.12' entsprechend geformt sein kann.

Zur Fixierung der Montageposition der Halteeinrichtung 2 entlang der Längsachse LA können zusätzliche Positionierungsmittel 6, 6' vorgesehen sein, welcher sich parallel zu den Schwenkachsen SA, SA' erstrecken und eine stabilisierende Verbindung zwischen zumindest einem der länglichen Profilelemente 2.1, 2.3 und dem plattenförmigen Grundkörper 1.1 herstellen.

Im ersten Ausführungsbeispiel stellen die Positionierungsmittel 6, 6' eine lösbare Wirkverbindung zwischen dem ersten und zweiten länglichen Profilelement 2.1, 2.3 her und positionieren diese exakt im zentralen Montagebereich 1.13 des plattenförmigen Grundkörpers 1.1. Beispielsweise können die Positionierungsmittel 6, 6' durch Schraubmittel gebildet sein, welche durch entsprechende Durchgangsbohrungen im ersten länglichen Profilelement 2.1, in dem daran anschließenden plattenförmigen Grundkörper 1.1 und im zweiten länglichen Profilelement 2.3 geführt sind, wobei vorzugsweise die im zweiten länglichen Profilelement 2.3 vorgesehen Durchgangsbohrung ein Innengewinde aufweist, mit dem die Schraubmittel in Wirkverbindung bringbar sind. Beispielsweise können bei der U-förmigen Ausgestaltung des zweiten länglichen Profilelements 2.3 zueinander fluchtende Durchgangsbohrungen sowohl im Anlageabschnitt 2.31 als auch im gegenüberliegenden Halteabschnitt 2.33 vorgesehen sein, durch welche sich die Schraubmittel erstrecken und die entweder gemeinsam oder einzeln ebenfalls in Wirkverbindung mit diesen durch Vorsehen entsprechender Innengewinde bringbar sind.

Im Falle des zweiten Ausführungsbeispiels sind die Durchgangsbohrungen für die Positionierungsmittel 6, 6' lediglich im Anlageabschnitt 2.11 vorgesehen, welche mit den entsprechend Durchgangsbohrungen im plattenförmigen Grundkörper 1.1 fluchten. Auch hier weisen die Durchgangsbohrungen im Anlageabschnitt 2.11 jeweils ein Innengewinde aus, so dass durch Schraubmittel gebildete Positionierungsmittel 6, 6' ein Wirkverbindung zwischen den Schraubmitteln und dem Anlageabschnitt 2.11 herstellbar ist.

Die Positionierungsmittel 6, 6' dienen lediglich die Position der Haltereinrichtung 2 insbesondere auch bei der Herstellung des flächigen Verbundes im zentralen Montagebereich 1.13 des plattenförmigen Grundkörpers 1.1 zu fixieren. Dies ist insbesondere beim Nachrüsten der Halteeinrichtung 2 bei bestehenden Dacheindeckungselementen 1 von Vorteil.

In einer in den Figuren nicht gezeigten Ausführungsvariante der Erfindung erstreckt sich ein freier Endabschnitt des ersten länglichen Profileelementes 2.1 bei einer flächigen Montage auf der Oberseite 1.11 des plattenförmigen Grundkörpers 1.1 des Dacheindeckungselementes 1 in einen unteren Randabschnitt des plattenförmigen Grundkörpers 1.1, und zwar denjenigen mit dem der plattenförmige Grundkörpers 1.1 auf dem das entlang der Längsachse LA anschließende Dacheindeckungselement 1' abschnittsweise aufliegt. Bei einer flächigen Montage des ersten länglichen Profileelementes 2.1 oder des zweiten länglichen Profilelementes 2.3 auf der Unterseite 1.12 des plattenförmigen Grundkörpers 1.1 erstreckt sich dessen jeweils freier Endabschnitt in den oberen Randabschnitt des plattenförmigen Grundkörpers 1.1, und zwar denjenigen der auf der Dachunterkonstruktion bzw. der Dachlatte 3' abschnittsweise aufliegt. Hierdurch wird die für den flächigen Verbund zur Verfügung stehende Anlagefläche entlang der Längsachse entsprechend erhöht, was zu einer zusätzlichen Versteifung des plattenförmigen Grundkörpers 1.1 führt.

Auch kann das erste und/oder zweite längliche Profileelemente 2.1, 2.3 im oberen und/oder unteren Randabschnitt einen verbreiterten freiendseitigen Profilabschnitt aufweisen, der zu einer Verbreiterung der Anlagefläche dient. Die Anlagefläche ist damit in Draufsicht T- oder L-förmig ausgebildet. Der freiendseitige Profilabschnitt steht beispielsweise links oder rechts oder beidseitig vom freien Endabschnitt des ersten und/oder zweiten länglichen Profileelementes 2.1, 2.3 seitlich weg und erstreckt sich in der den Anlageabschnitt 2.11 bzw. 2.31 aufnehmenden Ebene.

Vorzugsweise erstreckt sich das erste und/oder zweite längliche Profileelemente 2.1 über zwei Drittel der Längserstreckung des plattenförmigen Grundkörpers 1.1 des Dacheindeckungselementes 1 entlang der Längsachse LA.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Dacheindeckungsplatte
- 1': weitere Dacheindeckungsplatte
- 1.1: plattenförmiger Grundkörper
- 1.13: zentraler Montagebereich
- 1.11: Oberseite
- 1.12: Unterseite
- 1.2: schlitzförmige Ausnehmung
- 2: Halteeinrichtung
- 2.1: erstes längliches Profilelement
- 2.11: Anlageabschnitt
- 2.12: Halteabschnitt
- 2.2: Haltewinkelelement
- 2.21: Montagelanglöcher
- 2.3: zweites längliches Profilelement
- 2.31: Anlageabschnitt
- 2.32: Anschlagabschnitt
- 2.33: Halteabschnitt
- 3, 3': Dachlatten
- 4, 4': Verriegelungsmittel
- 4.11, 4.11': Verriegelungsabschnitt
- 4.12, 4.12': Montageabschnitt
- 5, 5': Betätigungsmittel
- 6, 6': Positionierungsmittel

- LA: Längsachse
- SA, SA': Schwenkachse

## Patentansprüche

1. Dacheindeckungsplatte (1) mit einer Halteeinrichtung (2) für Aufdachelemente, wobei die Dacheindeckungsplatte (1) einen plattenförmigen, sich entlang einer Längsachse (LA) erstreckenden Grundkörper (1.1) mit einer Ober- und Unterseite (1.11, 1.12) und die Halteeinrichtung (2) zumindest ein längliches Profilelement (2.1, 2.3) mit einem Anlageabschnitt (2.11, 2.31) aufweist, **dadurch gekennzeichnet, dass** zur Herstellung eines flächigen Verbundes zwischen dem plattenförmigen Grundkörper (1.1) und dem zumindest einem länglichen Profilelement (2.1, 2.3) dessen Anlageabschnitt (2.11, 2.31) mit dem plattenförmigen Grundkörper (1.1) direkt flächig verklebt ist, und zwar an der Oberseite (1.11) oder an der Unterseite (1.12) des plattenförmigen Grundkörpers (1.1).

2. Dacheindeckungsplatte (1) nach Anspruch 1, **dadurch gekennzeichnet, dass** der flächige Verbund sich entlang der Längsachse (LA) erstreckt.

3. Dacheindeckungsplatte (1) nach Anspruch 1 oder 2, **dadurch gekennzeichnet, dass** der flächige Verbund zwischen dem plattenförmigen Grundkörper (1.1) und dem zumindest einem Profilelement (2.1) zur Erhöhung der mechanischen Festigkeit des plattenförmigen Grundkörpers (1.1) vorgesehen ist.

4. Dacheindeckungsplatte (1) nach einem der Ansprüche 1 bis 3, **dadurch gekennzeichnet, dass** der Anlageabschnitt (2.11) plattenförmig, gitterartig oder wabenförmig ausgebildet ist und/oder dass der flächige Verbund durch eine direkte flächige Klebeverbindung zwischen dem Anlageabschnitt (2.11) und dem plattenförmigen Grundkörper (1.1) gebildet ist.

5. Dacheindeckungsplatte (1) nach einem der vorhergehenden Ansprüche, **dadurch gekennzeichnet, dass** die Halteeinrichtung (2) ein erstes und zweites längliches Profilelement (2.1, 2.3) umfasst, wobei jedes der Profilelemente (2.1, 2.3) einen Anlageabschnitt (2.11, 2.31) aufweist.

6. Dacheindeckungsplatte (1) nach Anspruch 5, **dadurch gekennzeichnet, dass** zur Herstellung des flächigen Verbundes zwischen dem plattenförmigen Grundkörper (1.1) und dem ersten und zweiten länglichen Profilelement (2.1, 2.3) der Anlageabschnitt (2.11) des ersten länglichen Profilelementes (2.1) mit der Oberseite (1.11) des plattenförmigen Grundkörpers (1.1) und der Anlageabschnitt (2.31) des zweiten länglichen Profilelementes (2.3) mit der Unterseite (1.12) des plattenförmigen Grundkörpers (1.1) flächig verklebt ist.

7. Dacheindeckungsplatte (1) nach einem der vorhergehenden Ansprüche, **dadurch gekennzeichnet, dass** zur Herstellung des flächigen Verbundes ein Klebstoff Verwendung findet, der zur Herstellung einer direkten flächigen Klebeverbindung zwischen Materialien mit unterschiedlichen Ausdehnungskoeffizienten geeignet ist und/oder dass zur Herstellung des flächigen Verbundes ein Klebstoff aus Epoxidharz Verwendung findet, der vorzugsweise kälteelastisch und/oder duktil ist.

8. Dacheindeckungsplatte (1) nach einem der vorhergehenden Ansprüche, **dadurch gekennzeichnet, dass** die Halteeinrichtung (2) zur Montage von Aufdachelementen in Form von thermischen oder elektrischen Solarmodulen, Steigmitteln, Schneefangvorrichtungen oder sonstige zur Dachmontage geeignete Baueinheiten ausgebildet ist und/oder dass der plattenförmige Grundkörper (1.1) zumindest einen sich entlang der Längsachse (LA) erstreckenden, zentralen Montagebereich (1.13) aufweist, an den der Anlageabschnitt (2.11, 2.31) zur Herstellung des flächigen Verbundes hinsichtlich Form und Größe angepasst ist.

9. Dacheindeckungsplatte (1) nach einem der vorhergehenden Ansprüche, **dadurch gekennzeichnet, dass** die Halteeinrichtung (2) Verriegelungsmittel (4, 4') zur Verriegelung der Dacheindeckungsplatte (1) an einer Dachunterkonstruktion aufweist, wobei die Verriegelungsmittel (4, 4') vorzugsweise von einem verriegelten Zustand in einen entriegelten Zustand und vice versa überführbar sind, und zwar besonders bevorzugt über Betätigungsmittel (5, 5') von der Oberseite (1.11) des plattenförmigen Grundkörpers (1.1).

10. Dacheindeckungsplatte (1) nach Anspruch 9, **dadurch gekennzeichnet, dass** die Verriegelungsmittel (4, 4') durch zumindest einen, vorzugsweise zwei Verriegelungshebelelement(en) (4.1, 4.1') gebildet sind, der bzw. die jeweils um eine Schwenkachse (SA, SA') dreh- oder schwenkbar sind, wobei die jeweilige Schwenkachse (SA, SA') vorzugsweise senkrecht zur Längsachse (LA) des plattenförmigen Grundkörpers (1.1) verläuft.

11. Dacheindeckungsplatte (1) nach einem der vorhergehenden Ansprüche, **dadurch gekennzeichnet, dass** zur Positionierung der Halteeinrichtung (2) in einem zentralen Montagebereich (1.3) des plattenförmigen Grundkörpers (1.1) Positionierungsmittel (6, 6') vorgesehen sind.

12. Dacheindeckungsplatte (1) nach einem der vorhergehenden Ansprüche, **dadurch gekennzeichnet, dass** das erste längliche Profielement (2.1) einen freien Endabschnitt aufweist, der sich bei einer flächigen Montage auf der Oberseite (1.11) des plattenförmigen Grundkörpers (1.1) des Dacheindeckungselementes (1) in einen unteren Randabschnitt des plattenförmigen Grundkörpers (1.1) erstreckt, und zwar in denjenigen, mit dem der plattenförmige Grundkörper (1.1) auf einem entlang der Längsachse (LA) anschließende Dacheindeckungselement (1') abschnittsweise zur Anlage gelangt.

13. Dacheindeckungsplatte (1) nach einem der Ansprüche 1 bis 12, **dadurch gekennzeichnet, dass** das erste längliche Profielement (2.1) oder das zweite längliche Profilelement (2.3) einen freien Endabschnitt aufweist, der sich bei einer flächigen Montage auf der Unterseite (1.12) des plattenförmigen Grundkörpers (1.1) des Dacheindeckungselementes (1) in einen unteren Randabschnitt des plattenförmigen Grundkörpers (1.1) erstreckt, und zwar in denjenigen, der zumindest abschnittsweise auf der Dachunterkonstruktion bzw. der Dachlatte (3') zur Anlage gelangt, wobei das erste und/oder zweite länglichen Profileelementes (2.1, 2.3) vorzugsweise im oberen und/oder unteren Randabschnitt einen verbreiterten freiendseitigen Profilabschnitt aufweisen.

14. Dacheindeckungsplatte nach einem der vorhergehenden Ansprüche, **dadurch gekennzeichnet, dass** das zumindest eine längliche Profilelement (2.1, 2.3) aus Metall, insbesondere einem Metallblech hergestellt ist und/oder dass die Dacheindeckungsplatte (1) aus gebrannten Ton, Beton oder einem vergleichbaren Material hergestellt ist.

15. Halteeinrichtung (2) zur Verwendung mit einer Dacheindeckungsplatte (1) nach einem der vorhergehenden Ansprüche, umfassend zumindest ein längliches Profilelement (2.1, 2.3) mit einem Anlageabschnitt (2.11, 2.31), **dadurch gekennzeichnet, dass** der Anlageabschnitt (2.11, 2.31) zur Herstellung eines flächigen Verbundes zwischen einem plattenförmigen Grundkörper (1.1) der Dacheindeckungsplatte (1) und dem Anlageabschnitt (2.11, 2.31) mittels einer direkten flächigen Klebeverbindung ausgebildet ist.
